# EUROPÄISCHE PATENTSCHRIFT

(11) **EP 1 368 399 B1**
(45) Veröffentlichungstag und Bekanntmachung des Hinweises auf die Patenterteilung: **23.10.2013**
(21) Anmeldenummer: 02706737.0
(22) Anmeldetag: 13.02.2002
(51) Int. Cl.: C08G 18/62, C09D 175/04, C09D 133/06

(54) **WÄSSRIGER MEHRKOMPONENTENBESCHICHTUNGSSTOFF, VERFAHREN ZU SEINER HERSTELLUNG UND SEINE VERWENDUNG**
AQUEOUS MULTI-CONSTITUENT COATING MATERIAL, METHOD FOR THE PRODUCTION THEREOF AND USE OF THE SAME
SUBSTANCE DE REVETEMENT AQUEUSE A PLUSIEURS COMPOSANTS, PROCEDE DE PRODUCTION ET UTILISATION DE CETTE SUBSTANCE

(30) Priorität: 13.02.2001 DE 10106574
(43) Veröffentlichungstag der Anmeldung: 10.12.2003
(73) Patentinhaber: BASF Coatings GmbH, 48165 Münster (DE)
(72) Erfinder: LETTMANN, Bernhard, 48317 Drensteinfurt (DE); JANSEN, Andreas, 48165 Münster (DE); PUDELSKI, Christella, 59387 Ascheberg (DE)
(74) Vertreter: Leifert & Steffan
(86) Internationale Anmeldenummer: PCT/EP2002/001459
(87) Internationale Veröffentlichungsnummer: WO 2002/064659

(56) Entgegenhaltungen:
- EP-A- 1 022 618
- WO-A-96/10595
- DE-C- 19 736 535

## Beschreibung

Die vorliegende Erfindung betrifft einen neuen wäßrigen Mehrkomponentenbeschichtungstoff. Außerdem betrifft die vorliegende Erfindung ein neues Verfahren zur Herstellung von wäßrigen Mehrkomponentenbeschichtungsstoffen. Des weiteren betrifft die vorliegende Erfindung die Verwendung der neuen wäßrigen Mehrkomponentenbeschichtungstoffe.

Wäßrige Mehrkomponentenbeschichtungstoffe, die mindestens
(I) eine wäßrige Komponente, enthaltend
   (A1) mindestens eine sekundäre wäßrige Dispersion mindestens eines (Meth)Acrylatcopolymerisats, das im statistischen Mittel mindestens eine isocyanatreaktive funktionelle Gruppe im Molekül enthält, und gegebenenfalls
   (A2) mindestens ein weiteres wasserverdünnbares Bindemittel, das mit den übrigen Bestandteilen der Komponente (I) verträglich ist, wie beispielsweise acrylierte Polyurethanharze und/oder Polyesteracrylate;
   sowie
(II) eine Komponente, enthaltend mindestens ein Polyisocyanat als Vernetzungsmittel,
enthalten, sind aus den europäischen Patenten EP 0 766 717 B1 oder EP 0 856 019 B 1 oder den deutschen Patentanmeldungen DE 198 55 146 A 1, DE 198 55 167 A 1 oder DE 199 04 317 A 1 bekannt. Das (Meth)Acrylatcopolymerisat (A1) kann durch mehrstufige, insbesondere zweistufige, Copolymerisation hergestellt werden. Die Komponente (I) dieser bekannten wäßrigen Mehrkomponentenbeschichtungstoffe kann Pigmente und/oder Füllstoffe enthalten. Sie können als Füller oder Decklack verwendet werden. In der Hauptsache werden sie aber Klarlacke zur Herstellung von Klarlackierungen im Rahmen von farb- und/oder effektgebenden Mehrschichtlackierungen eingesetzt. Hierbei weisen die Klarlacke zahlreiche vorteilhafte Eigenschaften wie einen niedrigen Gehalt an flüchtigen organischen Verbindungen (VOC) sowie eine sehr gute Homogenität, Standsicherheit, Handhabung und Spritzsicherheit auf. Auch die hieraus hergestellten Klarlackierungen haben, was die Fülle, den Glanz, die Ausspannung, die Witterungsbeständigkeit und die Benzinbeständigkeit betrifft, ein hervorragendes Eigenschaftsprofil. Die Kochergrenze dieser bekannten Klarlacke liegt bei 58 µm (DE 198 55 146 A 1) oder bei 60 µm (DE 198 55 167 A 1 oder DE 199 04 317 A1). Diese Kochergrenze ist für Klarlackierungen im allgemeinen völlige ausreichend, für die Herstellung von kocherfreien Füllerlackierung liegt sie allerdings zu tief.
WO 96/10595 A offenbart eine Zweikomponenten-Polyurethan-Zusammensetzung, die Pigmente enthalten kann, für kratzfeste Beschichtungen, enthaltend ein hydroxyl-funktionelles Polyacrylat in wässriger Dispersion und optional ein zweites Polyacrylat ohne gegenüber Isocyanat reaktive Gruppen.

Aufgabe der vorliegenden Erfindung ist es, einen neuen wäßrigen Mehrkomponentenbeschichtungsstoff bereitzustellen, der die Vorteile der bekannten wäßrigen Mehrkomponentenbeschichtungstoffe weiterhin aufweist, der aber eine deutlich höhere Kochergrenze hat, so daß er auch als Füller, insbesondere als Trockenschliff Füller, für die Herstellung von kocherfreien Füllerlackierungen mit einer hohen Trockenschichtdicke geeignet ist.

Demgemäß wurde der neue wäßrige Mehrkomponentenbeschichtungstoff gefunden, der
(I) eine wäßrige Komponente, herstellbar durch Vermischen mindestens der folgenden Ausgangsprodukte:
   (A) mindestens eine sekundäre wäßrige Dispersion mindestens eines (Meth)Acrylatcopolymerisats, das im statistischen Mittel mindestens eine isocyanatreaktive funktionelle Gruppe im Molekül enthält,
   (B) mindestens eine primäre wäßrige Dispersion mindestens eines (Meth)Acrylatcopolymerisats, das keine isocyanatreaktive funktionelle Gruppe enthält, und
   (C) mindestens ein Pigment und/oder einen Füllstoff;
      sowie
(II) eine Komponente, enthaltend mindestens ein Polyisocyanat als Vernetzungsmittel;
enthält.

Im Hinblick auf den Stand der Technik war es überraschend und für den Fachmann nicht vorhersehbar, daß die Kochergrenze der bekannten wäßrigen Mehrkomponentenbeschichtungstoffe durch Zugabe mindestens einer primären wäßrigen Dispersion eines (Meth)Acrylatcopolymerisat, das keine isocyanatreaktiven funktionellen Gruppen enthält, signifikant erhöht werden konnte, sodaß der neue wäßrige Mehrkomponentenbeschichtungstoff hervorragend für die Herstellung von kocherfreien Füllerlackierungen von hoher Trockenschichtdicke geeignet war. Besonders überraschte der Befund, daß die Kochergrenze sogar oberhalb 100 µm lag. Dabei blieben die sonstigen vorteilhaften Eigenschaften der bekannten wäßrigen Mehrkomponentenbeschichtungstoffe und der hieraus hergestellten Lackierungen in vollem Umfang erhalten. Aus diesem Grunde zeigten die neuen wäßrigen Mehrkomponentenbeschichtungsstoffe eine überraschende Anwendungsbreite und konnten insbesondere in der Automobilserien- und -reparaturlackierung, zur Beschichtung von Bauwerken im Innen- und Außenbereich, zur Lackierung von Türen, Fenstern und Möbeln, zur industriellen Lackierung, inklusive Coil Coating, Container Coating und der Imprägnierung und/oder Beschichtung elektrotechnischer Bauteile, sowie zur Lackierung von weißer Ware, inclusive Haushaltsgeräte, Heizkessel und Radiatoren, eingesetzt werden.

Die erfindungsgemäß zu verwendende wäßrige Komponente (I) kann nach den unterschiedlichsten, auf dem vorliegenden Gebiet üblichen und bekannten Verfahren hergestellt werden. Erfindungsgemäß ist es von Vorteil, wenn sie durch Vermischen der nachstehend im Detail beschriebenen Ausgangsprodukte (A), (B) und (C) sowie gegebenenfalls weiterer Ausgangsprodukte (D) hergestellt wird.

Bei dem Ausgangsprodukt (A) handelt es sich um die sekundäre wäßrige Dispersion eines (Meth)Acrylatcopolymerisats (A).

Dieses enthält im statistischen Mittel mindestens eine, insbesondere mindestens zwei, isocyanatreaktive funktionelle Gruppe(n) im Molekül.

Beispiele geeigneter isocyanatreaktiver funktioneller Gruppen sind Hydroxylgruppen, Thiolgruppen, primäre und sekundäre Aminogruppen und Iminogruppen, von denen die Hydroxylgruppen besonders vorteilhaft sind und deshalb bevorzugt eingesetzt werden. Vorzugsweise sind die Hydroxylgruppen in den (Meth)Acrylatcopolymerisaten in einer Menge enthalten, daß eine Hydroxylzahl von 30 bis 250 mg KOH/g resultiert.

Die (Meth)Acrylatcopolymerisate (A) sind in Wasser löslich oder dispergierbar. Die Wasserlöslichkeit oder -dispergierbarkeit wird über einen entsprechenden Gehalt an funktionellen Gruppen, die sie wasserdispergierbar und/oder wasserlöslich machen, eingestellt. Dies sind entweder
- funktionelle Gruppen, die durch Neutralisationsmittel und/oder Quatemisierungsmittel in Kationen überführt werden können, oder
- funktionelle Gruppen, die durch Neutralisationsmittel in Anionen überführt werden können, und/oder anionische Gruppen und/oder
- nichtionische hydrophile Gruppen, insbesondere Poly(alkylenether)-Gruppen.

Beispiele geeigneter funktioneller Gruppen, die durch Neutralisationsmittel und/oder Quaternisierungsmittel in Kationen überführt werden können, sind primäre, sekundäre oder tertiäre Aminogruppen, sekundäre Sulfidgruppen oder tertiäre Phoshingruppen, insbesondere tertiäre Aminogruppen oder sekundäre Sulfidgruppen.

Beispiele geeigneter kationischer Gruppen sind primäre, sekundäre, tertiäre oder quaternäre Ammoniumgruppen, tertiäre Sulfoniumgruppen oder quaternäre Phosphoniumgruppen, vorzugsweise quaternäre Ammoniumgruppen oder tertiäre Sulfoniumgruppen, insbesondere aber tertiäre Sulfoniumgruppen.

Beispiele geeigneter funktioneller Gruppen, die durch Neutralisationsmittel in Anionen überführt werden können, sind Carbonsäure-, Sulfonsäure- oder Phosphonsäuregruppen, insbesondere Carbonsäuregruppen.

Beispiele geeigneter anionischer Gruppen sind Carboxylat-, Sulfonat- oder Phosphonatgruppen, insbesondere Carboxylatgruppen.

Beispiele geeigneter Neutralisationsmittel für in Kationen umwandelbare funktionelle Gruppen sind anorganische und organische Säuren wie Schwefelsäure, Salzsäure, Phosphorsäure, Ameisensäure, Essigsäure, Milchsäure, Dimethylolpropionsäure oder Zitronensäure.

Beispiele für geeignete Neutralisationsmittel für in Anionen umwandelbare funktionelle Gruppen sind Ammoniak, Amine oder Aminoalkohole, wie z.B. Trimethylamin, Triethylamin, Tributylamin, Dibutylamin Dimethylanilin, Diethylanilin, Triphenylamin, Dimethylethanolamin, Diethylethanolamin, Methyldiethanolamin, 2-Aminomethylpropanol, Dimethylisopropylamin, Dimethylisopropanolamin oder Triethanolamin. Bevorzugt wird als Neutralisationsmittel Dimethylethanolamin, Dibutylamin und/oder Triethylamin eingesetzt.

Vorzugsweise liegt der Gehalt der (Meth)Acrylatcopolymerisate (A) an den funktionellen Gruppen, die sie wasserdispergierbar und/oder wasserlöslich machen, bei 2 bis 250 mEqu./100 g (Meth)Acrylatcopolymerisat (A). Der Neutralisationsgrad liegt vorzugsweise bei 40 bis 150%.

Vorzugsweise wird die Wasserlöslichkeit oder -dispergierbarkeit über einen entsprechenden Gehalt an Carbonsäure- und/oder Carboxylatgruppen eingestellt. Vorzugsweise liegt dieser Gehalt bei 5 bis 150 mg KOH/g.

Das zahlenmittlere Molekulargewicht Mn der (Meth)Acrylatcopolymerisate (A) kann breit variieren. Vorzugsweise werden (Meth)Acrylatcopolymerisate (A) eingesetzt, die kein allzu hohes zahlenmittleres Molekulargewicht Mn aufweisen, weil ansonsten die Viskosität der betreffenden wäßrige Komponente (I) zu hoch wird Wenn die Vermischung der Komponenten (I) und (II) per Hand folgen soll, was auf dem Gebiet der Autoreparaturlackierung häufig der Fall ist, empfiehlt es sich die (Meth)Acrylatcopolymerisate (A) so einzustellen, daß ihre 50%igen Lösungen in Ethoxyethylpropionat bei 23°C eine Viskosität ≤ 10 dPas aufweisen. Sofern eine maschinelle Vermischung erfolgen soll, können höher viskose (Meth)Acrylatcopolymerisate (A) verwendet werden, deren 50%igen Lösungen in Ethoxyethylpropionat bei bei 23°C eine Viskosität ≤ 100 dPas aufweisen. Die Viskosität wird nach oben lediglich durch die Leistungsfähigkeit der Mischaggregate begrenzt. Besonders bevorzugt sind (Meth)Acrylatcopolymerisate (A) mit einem zahlenmittleren Molekulargewicht Mn zwischen 1.000 und 30.000 Dalton.

Insbesondere werden (Meth)Acrylatcopolymerisate (A) eingesetzt, die erhältlich sind durch Copolymerisation in einem organischen Lösemittel oder einem Lösemittelgemisch und in Gegenwart mindestens eines Polymerisationsinitiators von
(a1) einem von (a2), (a3), (a4), (a5) und (a6) verschiedenen, mit (a2), (a3), (a4), (a5) und (a6) copolymerisierbaren, im wesentlichen säuregruppenfreien (Meth)acrylsäureester oder einem Gemisch aus solchen Monomeren,
(a2) einem mit (a1), (a3), (a4), (a5) und (a6) copolymerisierbaren, von (a5) verschiedenen, ethylenisch ungesättigten Monomer, das mindestens eine Hydroxylgruppe pro Molekül trägt und im wesentlichen säuregruppenfrei ist, oder einem Gemisch aus solchen Monomeren,
(a3) einem mindestens eine Säuregruppe, die in die entsprechende Säureaniongruppe überführbar ist, pro Molekül tragenden, mit (a1), (a2), (a4), (a5) und (a6) copolymerisierbaren, ethylenisch ungesättigten Monomer oder einem Gemisch aus solchen Monomeren und
(a4) gegebenenfalls einem oder mehreren Vinylestern von in alpha-Stellung verzweigten Monocarbonsäuren mit 5 bis 18 C-Atomen je Molekül und/oder
(a5) gegebenenfalls mindestens einem Umsetzungsprodukt aus Acrylsäure und/oder Methacrylsäure mit dem Glycidylester einer in alpha-Stellung verzweigten Monocarbonsäure mit 5 bis 18 C-Atomen je Molekül oder anstelle des Umsetzungsproduktes einer äquivalenten Menge Acryl- und/oder Methacrylsäure, die dann während oder nach der Polymerisationsreaktion mit dem Glycidylester einer in alpha-Stellung verzweigten Monocarbonsäure mit 5 bis 18 C-Atomen je Molekül umgesetzt wird,
(a6) gegebenenfalls einem mit (a1), (a2), (a3), (a4), und (a5) copolymerisierbaren, von (a1), (a2), (a4) und (a5) verschiedenen, im wesentlichen säuregruppenfreien, ethylenisch ungesättigten Monomer oder einem Gemisch aus solchen Monomeren,
wobei (a1), (a2), (a3), (a4), (a5) und (a6) in Art und Menge so ausgewählt werden, daß das (Meth)Acrylatcopolymerisat (A) die gewünschte OH-Zahl, Säurezahl und das gewünschte Molekulargewicht aufweist.

Zur Herstellung der erfindungsgemäß eingesetzten Polyacrylatharze kann als Monomer (a1) jeder mit (a2), (a3), (a4), (a5) und (a6) copolymerisierbare (Meth)Acrylsäurealkyl- oder -cycloalkylester mit bis zu 20 Kohlenstoffatomen im Alkylrest, insbesondere Methyl-, Ethyl-, Propyl-, Isopropyl-, n-Butyl-, sec.-Butyl-, tert.-Butyl-, Hexyl-, Ethylhexyl-, Stearyl- und Laurylacrylat oder -methacrylat; cycloaliphatische (Meth)acrylsäureester, insbesondere Cyclohexyl-, Isobornyl-, Dicyclopentadienyl-, Octahydro-4,7-methano-1H-inden-methanol- oder tert.-Butylcyclohexyl(meth)acrylat; (Meth)Acrylsäureoxaalkylester oder - oxacycloalkylester wie Ethyltriglykol(meth)acrylat und Methoxyoligoglykol(meth)acrylat mit einem Molekulargewicht Mn von vorzugsweise 550; oder andere ethoxylierte und/oder propoxylierte hydroxylgruppenfreie (Meth)acrylsäurederivate; verwendet werden. Diese können in untergeordneten Mengen höherfunktionelle (Meth)Acrylsäurealkyl- oder-cycloalkylester wie Ethylengylkol-, Propylenglykol-, Diethylenglykol-, Dipropylenglykol-, Butylenglykol-, Pentan-1,5-diol-, Hexan-1,6-diol-, Octahydro-4,7-methano-1H-inden-dimethanol- oder Cyclohexan-1,2-, -1,3- oder - 1,4-diol-di(meth)acrylat; Trimethylolpropan-di- oder -tri(meth)acrylat; oder Pentaerythrit-di-, -tri- oder -tetra(meth)acrylat; enthalten. Im Rahmen der vorliegenden Erfindung sind hierbei unter untergeordneten Mengen an höherfunktionellen Monomeren solche Mengen zu verstehen, welche nicht zur Vernetzung oder Gelierung der Polyacrylatharze führen.

Als Monomere (a2) können mit (a1), (a2), (a3), (a4), (a5) und (a6) copolymerisierbare und von (a5) verschiedene, ethylenisch ungesättigte Monomer, die mindestens eine Hydroxylgruppe pro Molekül tragen und im wesentlichen säuregruppenfrei sind, wie Hydroxyalkylester der Acrylsäure, Methacrylsäure oder einer anderen alpha,beta-ethylenisch ungesättigten Carbonsäure, welche sich von einem Alkylenglykol ableiten, der mit der Säure verestert ist, oder durch Umsetzung der Säure mit einem Alkylenoxid erhältlich sind, insbesondere Hydroxyalkylester der Acrylsäure, Methacrylsäure, Ethacrylsäure, Crotonsäure, Maleinsäure, Fumarsäure oder Itaconsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-, 4-Hydroxybutylacrylat, -methacrylat, -ethacrylat, -crotonat, -maleinat, -fumarat oder -itaconat; 1,4-Bis(hydroxymethyl)cyclohexan-, Octahydro-4,7-methano-1H-inden-dimethanol-oder Methylpropandiolmonoacrylat, -monomethacrylat, -monoethacrylat, - monocrotonat, -monomaleinat, -monofumarat oder -monoitaconat; oder Umsetzungsprodukte aus cyclischen Estern, wie z.B. epsilon-Caprolacton und diesen Hydroxyalkylestern; oder olefinisch ungesättigte Alkohole wie Allylalkohol oder Polyole wie Trimethylolpropanmono- oder diallylether oder Pentaerythritmono-, -di- oder -triallylether; verwendet werden. Hinsichtlich dieser höherfunktionellen Monomeren (a2) gilt das für die höherfunktionellen Monomeren (a1) Gesagte sinngemäß.

Als Monomer (a3) kann jedes mindestens eine Säuregruppe, vorzugsweise eine Carboxylgruppe, pro Molekül tragende, mit (a1), (a2), (a4), (a5) und (a6) copolymerisierbare, ethylenisch ungesättigte Monomer oder ein Gemisch aus solchen Monomeren verwendet werden. Als Komponente (a3) werden besonders bevorzugt Acrylsäure und/oder Methacrylsäure eingesetzt. Es können aber auch andere ethylenisch ungesättigte Carbonsäuren mit bis zu 6 C-Atomen im Molekül verwendet werden. Beispiele für solche Säuren sind Ethacrylsäure, Crotonsäure, Maleinsäure, Fumarsäure und Itaconsäure. Weiterhin können ethylenisch ungesättigte Sulfon- oder Phosphonsäuren, bzw. deren Teilester, als Komponente (a3) verwendet werden. Als Komponente (a3) kommen desweiteren Maleinsäuremono(meth)acryloyloxyethylester, Bernsteinsäuremono(meth)acryloyloxyethylester und Phthalsäuremono(meth)acryloyloxyethylester
in Betracht.

Als Monomere (a4) werden ein oder mehrere Vinylester von in alpha-Stellung verzweigten Monocarbonsäuren mit 5 bis 18 C-Atomen im Molekül eingesetzt. Die verzweigten Monocarbonsäuren können erhalten werden durch Umsetzung von Ameisensäure oder Kohlenmonoxid und Wasser mit Olefinen in Anwesenheit eines flüssigen, stark sauren Katalysators; die Olefine können Crack-Produkte von paraffinischen Kohlenwasserstoffen, wie Mineralölfraktionen, sein und können sowohl verzweigte wie geradkettige acyclische und/oder cycloaliphatische Olefine enthalten. Bei der Umsetzung solcher Olefine mit Ameisensäure bzw. mit Kohlenmonoxid und Wasser entsteht ein Gemisch aus Carbonsäuren, bei denen die Carboxylgruppen vorwiegend an einem quaternären Kohlenstoffatom sitzen. Andere olefinische Ausgangsstoffe sind z.B. Propylentrimer, Propylentetramer und Diisobutylen. Die Vinylester können aber auch auf an sich bekannte Weise aus den Säuren hergestellt werden, z.B. indem man die Säure mit Acetylen reagieren läßt. Besonders bevorzugt werden - wegen der guten Verfügbarkeit - Vinylester von gesättigten aliphatischen Monocarbonsäuren mit 9 bis 11 C-Atomen, die am alpha-C-Atom verzweigt sind, eingesetzt.

Als Monomer (a5) wird das Umsetzungsprodukt aus Acrylsäure und/oder Methacrylsäure mit dem Glycidylester einer in alpha-Stellung verzweigten Monocarbonsäure mit 5 bis 18 C-Atomen je Molekül eingesetzt. Glycidylester stark verzweigter Monocarbonsäuren sind unter dem Handelsnamen "Cardura" erhältlich. Die Umsetzung der Acryl- oder Methacrylsäure mit dem Glycidylester einer Carbonsäure mit einem tertiären alpha-Kohlenstoffatom kann vorher, während oder nach der Polymerisationsreaktion erfolgen. Bevorzugt wird als Komponente (a5) das Umsetzungsprodukt von Acryl- und/oder Methacrylsäure mit dem Glycidylester der Versaticsäure eingesetzt. Dieser Glycidylester ist unter dem Namen "Cardura E10" im Handel erhältlich.

Als Monomere (a6) können alle mit (a1), (a2), (a3), (a4) und (a5) copolymerisierbaren, von (a1), (a2), (a3) und (a4) verschiedenen, im wesentlichen säuregruppenfreien ethylenisch ungesättigten Monomere oder Gemische aus solchen Monomeren verwendet werden. Als Monomere (a6) kommmen
- Olefine wie Ethylen, Propylen, But-1-en, Pent-1-en, Hex-1-en, Cyclohexen, Cyclopenten, Norbonen, Butadien, Isopren, Cylopentadien und/oder Dicyclopentadien;
- (Meth)Acrylsäureamide wie (Meth)Acrylsäureamid, N-Methyl -, N,N-Dimethyl-, N-Ethyl-, N,N-Diethyl-, N-Propyl-, N,N-Dipropyl, N-Butyl-, N,N-Dibutyl-, N-Cyclohexyl- und/oder N,N-Cyclohexyl-methyl-(meth)acrylsäureamid;
- Epoxidgruppen enthaltende Monomere wie der Glycidylester der Acrylsäure, Methacrylsäure, Ethacrylsäure, Crotonsäure, Maleinsäure, Fumarsäure und/oder Itaconsäure;
- vinylaromatische Kohlenwasserstoffe, wie Styrol, alpha-Alkylstyrole, insbesondere alpha-Methylstyrol, und/oder Vinyltoluol;
- Nitrile wie Acrylnitril und/oder Methacrylnitril;
- Vinylverbindungen wie Vinylchlorid, Vinylfluorid, Vinylidendichlorid, Vinylidendifluorid; N-Vinylpyrrolidon; Vinylether wie Ethylvinylether, n-Propylvinylether, Isopropylvinylether, n-Butylvinylether, Isobutylvinylether und/oder Vinylcyclohexylether; Vinylester wie Vinylacetat, Vinylpropionat, Vinylbutyrat, Vinylpivalat und/oder der Vinylester der 2-Methyl-2-ethylheptansäure; und/oder
- Polysiloxanmakromonomere, die ein zahlenmittleres Molekulargewicht Mn von 1.000 bis 40.000, bevorzugt von 2.000 bis 20.000, besonders bevorzugt 2.500 bis 10.000 und insbesondere 3.000 bis 7.000 und im Mittel 0,5 bis 2,5, bevorzugt 0,5 bis 1,5, ethylenisch ungesättigte Doppelbindungen pro Molekül aufweisen, wie sie in der DE-A-38 07 571 auf den Seiten 5 bis 7, der DE-A 37 06 095 in den Spalten 3 bis 7, der EP-B-0 358 153 auf den Seiten 3 bis 6, in der US-A 4,754,014 in den Spalten 5 bis 9, in der DE-A 44 21 823 oder in der der internationalen Patentanmeldung WO 92/22615 auf Seite 12, Zeile 18, bis Seite 18, Zeile 10, beschrieben sind, oder Acryloxysilan-enthaltende Vinylmonomere, herstellbar sind durch Umsetzung hydroxyfunktioneller Silane mit Epichlorhydrin und anschließender Umsetzung des Reaktionsproduktes mit Methacrylsäure und/oder Hydroxyalkylestern der (Meth)acrylsäure;
in Betracht.

Vorzugsweise werden vinylaromatische Kohlenwasserstoffe eingesetzt.

Es ist von Vorteil, die Polysiloxanmakromonomeren (a6) zusammen mit anderen Monomeren (a6) verwenden. Hierbei soll die Menge des oder der Polysiloxanmakromonomeren (a6) zur Modifizierung der Acrylatcopolymerisate (A1) weniger als 5 Gew.-%, bevorzugt 0,05 bis 2,5 Gew.-%, besonders bevorzugt 0,05 bis 0,8 Gew.-%, jeweils bezogen auf das Gesamtgewicht der zur Herstellung des Copolymerisats (A1) eingesetzten Monomeren, betragen. Die Verwendung derartiger Polysiloxanmakromonomerer führt zu einer Verbesserung des Slips der erfindungsgemäßen Beschichtungen.

Die Art und Menge der Komponenten (a1) bis (a6) wird so ausgewählt, daß das (Meth)Acrylatcopolymerisat (A) die gewünschte OH-Zahl, Säurezahl und Glasübergangstemperatur aufweist. Besonders bevorzugt eingesetzte (Meth)Acrylatcopolymerisate (A) werden erhalten durch Copolymerisation von
(a1) 20 bis 60 Gew.-%, bevorzugt 30 bis 50 Gew.-%, der Monomeren (a1),
(a2) 10 bis 50 Gew.-%, bevorzugt 15 bis 40 Gew.%, der Monomeren (a2),
(a3) 1 bis 15 Gew.-%, bevorzugt 1 bis 8 Gew.-%, der Monomeren (a3),
(a4) 0 bis 25 Gew.-%, bevorzugt 5 bis 15 Gew.-%, der Monomeren (a4),
(a5) 0 bis 25 Gew.-%, bevorzugt 5 bis 15 Gew.-%, der Monomeren (a5) und
(a6) 5 bis 30 Gew.-%, bevorzugt 10 bis 20 Gew.-%, der Monomeren (a6),
wobei die Summe der Gewichtsanteile der Monomeren (a1) bis (a6) jeweils 100 Gew.-% beträgt.

Die Herstellung der erfindungsgemäß eingesetzten (Meth)Acrylatcopolymerisate (A) erfolgt in einem organischen Lösemittel oder Lösemittelgemisch und in Gegenwart mindestens eines Polymerisationsinitiators. Als organische Lösemittel und Polymerisationsinitiatoren werden die für die Herstellung von (Meth)Acrylatcopolymerisaten üblichen und für die Herstellung von wäßrigen Dispersionen geeigneten Lösemittel und Polymerisationsinitiatoren eingesetzt. Dabei können die Lösemittel an der Reaktion mit der vernetzenden Komponente (II) teilnehmen und somit als Reaktiwerdünner wirken.

Beispiele geeigneter Reaktiverdünner sind stellungsisomere Diethyloctandiole, oligomere Polyole oder Hydroxylgruppen enthaltende hyperverzweigte Verbindungen oder Dendrimere, wie sie in den Patentanmeldungen DE 198 09 643 A 1, DE 198 40 605 A 1 oder DE 198 05 421 A 1 beschrieben werden.

Weitere Beispiele geeigneter Reaktiwerdünner sind Polycarbonatdiole, Polyesterpolyole, Poly(meth)acrylatdiole oder hydroxylgruppenhaltige Polyadditionsprodukte.

Beispiele geeigneter isocyanatreaktiver Lösemittel, welche als monofunktionelle Reaktivverdünner angesehen werden können, sind Butylglykol, 2-Methoxypropanol, n-Butanol, Methoxybutanol, n-Propanol, Ethylenglykolmonomethylether, Ethylenglykolmonoethylether, Ethylenglykolmonobutylether, Diethylenglykolmonomethylether, Diethylenglykolmonoethylether, Diethylenglykoldiethylether, Diethylenglykolmo-nobutylether, Trimethylolpropan, 2-Hydroxypropionsäure-ethylester oder 3-Methyl-3-methoxybutanol sowie Derivate auf Basis von Propylenglykol, z.B. Ethoxyethylpropionat, Isopropoxypropanol oder Methoxypropylacetat genannt.

Es ist dabei auch möglich, die (Meth)Acrylatcopolymerisate (A) zunächst in einem Lösemittel, das nicht wasserverdünnbar ist, herzustellen und dieses Lösemittel nach der Copolymerisation gegebenenfalls teilweise durch wasserverdünnbare Lösemittel zu ersetzen.

Beispiele geeigneter Polymerisationsinitiatoren sind freie Radikale bildende Initiatoren, wie z.B. organische Peroxide, organische Azoverbindungen oder C-C-spaltende Initiatoren wie Dialkylperoxide, Peroxocarbonsäuren, Peroxodicarbonate, Peroxidester, Hydroperoxide, Ketonperoxide, Azodinitrile oder Benzpinakolsilylether. Die Initiatoren werden bevorzugt in einer Menge von 1 bis 25 Gew.-%, besonders bevorzugt von 2 bis 10 Gew.-%, bezogen auf das Gesamtgewicht der Monomeren (a1) bis (a6), eingesetzt.

Die Copolymerisation wird zweckmäßigerweise bei einer Temperatur von 80 bis 200°C, vorzugsweise 110 bis 180°C, durchgerührt. Bevorzugt wird als Lösemittel Methylisobutylketon eingesetzt.

Das (Meth)Acrylatcopolymerisat (A) wird durch mehrstufige Copolymerisation hergestellt.

Bevorzugt wird das (Meth)Acrylatcopolymerisat (A) nach einem Zweistufenverfahren hergestellt, da so die resultierenden neuen wäßrigen Mehrkomponentenbeschichtungstoffe eine bessere Verarbeitbarkeit aufweisen. Bevorzugt werden daher (Meth)Acrylatcopolymerisate (A) eingesetzt, die erhältlich sind, indem
1. ein Gemisch aus (a1), (a2), (a4), (a5) und (a6) oder ein Gemisch aus Teilen der Monomeren (a1), (a2), (a4), (a5) und (a6) in einem organischen Lösemittel und/oder in einem der vorstehend genannten Reaktivverdünner polymerisiert wird,
2. nachdem mindestens 60 Gew.-% des aus (a1), (a2), (a4), (a5) und gegebenenfalls (a6) bestehenden Gemisches zugegeben worden sind, (a3) und der gegebenenfalls vorhandene Rest der Monomeren (a1), (a2), (a4), (a5) und (a6) zugegeben werden und weiter polymerisiert wird und
3. nach Beendigung der Copolymerisation die im erhaltenen (Meth)Acrylatcopolymerisat vorhandenen kationen- oder anionenbildenden funktionelle Gruppen zumindest teilweise neutralisiert.

Daneben ist es aber auch möglich, die Monomeren (a4) und/oder (a5) zusammen mit zumindest einem Teil des Lösemittels vorzulegen und die restlichen Monomeren zuzudosieren. Außerdem können auch die Monomeren (a4) und/oder (a5) nur teilweise zusammen mit zumindest einem Teil des Lösemittels in die Vorlage gegeben werden und der Rest dieser Monomeren wie oben beschrieben zugegeben werden. Bevorzugt werden beispielsweise mindestens 20 Gew.-% des Lösemittels und ca. 10 Gew.-% der Komponente (a4) und (a5) sowie gegebenenfalls Teilen der Monomeren (a1) und (a6) vorgelegt.

Bevorzugt ist außerdem die Herstellung der (Meth)Acrylatcopolymerisate (A) durch ein Zweistufenverfahren, bei dem die erste Stufe 1 bis 8 Stunden, vorzugsweise 1,5 bis 4 Stunden, dauert und die Zugabe der Mischung aus (a3) und dem gegebenenfalls vorhandenen Rest der Monomeren (a1), (a2), (a4), (a5) und (a6) innerhalb von 20 bis 120 Minuten, vorzugsweise innerhalb von 30 bis 90 Minuten, erfolgt. Nach Beendigung der Zugabe der Mischung aus (a3) und dem gegebenenfalls vorhandenen Rest der Monomeren (a1), (a2), (a4), (a5) und (a6) wird so lange weiter polymerisiert, bis alle eingesetzten Monomeren im wesentlichen vollständig umgesetzt worden sind. Hierbei kann sich die zweite Stufe unmittelbar der ersten anschließen. Indes kann mit der zweiten Stufe erst nach einer gewissen Zeit, beispeilsweise nach 10 min bis 10 Stunden, begonnen werden.

Die Menge und Zugabegeschwindigkeit des Initiators wird vorzugsweise so gewählt, daß ein (Meth)Acrylatcopolymerisat (A) mit einem zahlenmittleren Molekulargewicht Mn von 1.000 bis 30.000 Dalton erhalten wird. Es ist bevorzugt, daß mit dem Initiatorzulauf einige Zeit, im allgemeinen ca. 15 Minuten, vor dem Zulauf der Monomeren begonnen wird. Ferner ist ein Verfahren bevorzugt, bei dem die Initiatorzugabe zum gleichen Zeitpunkt wie die Zugabe der Monomeren begonnen und etwa eine halbe Stunde nachdem die Zugabe der Monomeren beendet worden ist, beendet wird. Der Initiator wird vorzugsweise in konstanter Menge pro Zeiteinheit zugegeben. Nach Beendigung der Initiatorzugabe wird das Reaktionsgemisch noch so lange (in der Regel 1,5 Stunden) auf Polymerisationstemperatur gehalten, bis alle eingesetzten Monomere im wesentlichen vollständig umgesetzt worden sind. "Im wesentlichen vollständig umgesetzt" soll bedeuten, daß vorzugsweise 100 Gew.-% der eingesetzten Monomere umgesetzt worden sind, daß es aber auch möglich ist, daß ein geringer Restmonomerengehalt von höchstens bis zu etwa 0,5 Gew.-%, bezogen auf das Gewicht der Reaktionsmischung, unumgesetzt zurückbleiben kann.

Bevorzugt werden die Monomeren zur Herstellung der (Meth)Acrylatcopolymerisate (A) bei einem nicht allzu hohen Polymerisationsfestkörper, bevorzugt bei einem Polymerisationsfestkörper von 80 bis 50 Gew.-%, bezogen auf die Monomeren, polymerisiert und anschließend die Lösemittel teilweise destillativ entfernt, so daß die entstehenden (Meth)Acrylatcopolymerisat-Lösungen (A) einen Festkörpergehalt von bevorzugt 100 bis 60 Gew.-% aufweisen.

Die Herstellung der (Meth)Acrylatcopolymerisate (A) weist keine methodischen Besonderheiten auf, sondern erfolgt mit Hilfe der auf dem Kunststoffgebiet üblichen und bekannten Methoden der kontinuierlichen oder diskontinuierlichen Copolymerisation unter Normaldruck oder Überdruck. Als Reaktoren für die Copolymerisation kommen die üblichen und bekannten Rührkessel, Rührkesselkaskaden, Rohrreaktoren, Schlaufenreaktoren oder Taylorreaktoren, wie sie beispielsweise in der Patentschriften und den Patentanmeldungen DE 1 071 241 B 1, EP 0 498 583 A 1 oder DE 198 28 742 A 1 oder in dem Artikel von K. Kataoka in Chemical Engineering Science, Band 50, Heft 9, 1995, Seiten 1409 bis 1416, beschrieben werden, in Betracht.

Nach ihrer Herstellung werden die (Meth)Acrylatcopolymerisate (A) zur Herstellung der sekundären wäßrigen Dispersion (A) in Wasser oder in einem wäßrigen Medium dispergiert, das in untergeordneten Mengen feste, flüssige oder gasförmige organische und/oder anorganische, nieder- und/oder hochmolekulare Stoffe molekulardispers gelöst enthält. Im Rahmen der vorliegenden Erfindung ist unter einer "untergeordneten Menge" eine Menge zu verstehen, welche den wäßrigen Charakter des wäßrigen Mediums nicht aufhebt. Vorzugsweise wird deionisiertes Wasser verwendet.

Der Festkörpergehalt der sekundären wäßrigen Dispersion (A) kann breit variieren. Vorzugsweise liegt er bei 10 bis 80, bevorzugt 15 bis 75, besonders bevorzugt 20 bis 70, ganz besonders bevorzugt 25 bis 65 und insbesondere 30 bis 55 Gew.%, jeweils bezogen auf die Dispersion (A).

Bei dem Ausgangsprodukt (B) handelt es sich um eine primäre wäßrige Dispersion mindestens eines (Meth)Acrylatcopolymerisats (B), das keine isocyanatreaktive funktionelle Gruppe enthält.

Die (Meth)Acrylatcopolymerisate (B) werden durch Emulsionspolymerisation hergestellt und fallen daher direkt als primäre Dispersion an. Für die Emulsionspolymerisation können die vorstehend beschriebenen Vorrichtungen und Initiatoren verwendet werden. Es kommen auch üblichen und bekannten radikalischen Redox-Initiatoren in Betracht. Desweiteren empfiehlt es sich bei der Emulsionspolymerisation die in der internationalen Patentanmeldung WO 97/23306, Seite 3, 5. Abs., und der die Seiten 3 und 4 übergreifenden Abs., beschriebenen Emulgatoren zu verwenden.

Vorzugsweise liegt die Glasübergangstemperatur der (Meth)Acrylatcopolymerisate (B) zwischen -10 und 70, bevorzugt 0 und 60, besonders bevorzugt 10 und 50 und insbesondere 15 und 40°C. Ihr zahlenmittleres Molekulargewicht Mn (gelpermeationschromatographisch bestimmt mit Polystyrol als Standard) liegt vorzugsweise bei 100.000 bis 3.000.000, bevorzugt 150.000 bis 2.500.000, besonders bevorzugt 200.000 bis 2.000.000, ganz besonders bevorzugt 250.000 bis 1.750.000 und insbesondere 300.000 bis 1.500.000 Dalton.

Vorzugsweise werden die (Meth)Acrylatcopolymerisate (B) durch Copolymerisation der vorstehend beschriebenen
- Monomeren (a1), insbesondere(Meth)Acrylsäurealkylester mit 1 bis 8 Kohlenstoffatomen im Alkylrest, insbesondere Methyl-, Ethyl-, Propyl-, Isopropyl-, n-Butyl-, sec.-Butyl-, tert.-Butyl-, Hexyl- oder Ethylhexylacrylat oder -methacrylat, speziell n-Butylacrylat,
- Monomeren (a3), insbesondere Acrylsäure und Methacrylsäure, speziell Acrylsäure, und
- Monomeren (a6), insbesondere vinylaromatische Monomere, insbesondere Styrol, alpha-Methylstyrol und/oder Vinyltoluol, speziell Styrol, sowie gegebenenfalls (Meth)Acrylamid und seine vorstehend beschriebenen Derivate
eingesetzt.

Die Zusammensetzung der (Meth)Acrylatcopolymerisate (B) kann breit variieren. Vorzugsweise enthalten sie, jeweils bezogen auf das (Meth)Acrylatcopolymerisat (B),
- 10 bis 80, bevorzugt 15 bis 75, besonders bevorzugt 20 bis 70, ganz besonders bevorzugt 25 bis 65 und insbesondere 30 bis 60 Gew.-% an einpolymerisierten Monomeren (a1),
- 0,1 bis 20, bevorzugt 0,2 bis 18, besonders bevorzugt 0,3 bis 16, ganz besonders bevorzugt 0,4 bis 14 insbesondere 0,5 bis 10 Gew.-% an einpolymerisierten Monomeren (a3) und
- 10 bis 80, bevorzugt 15 bis 75, besonders bevorzugt 20 bis 70, ganz besonders bevorzugt 25 bis 65 und insbesondere 30 bis 60 Gew.-% an einpolymerisierten Monomeren (a6).

Der Festkörpergehalt der primären wäßrigen Dispersion (B) kann breit variieren. Vorzugsweise liegt er bei 10 bis 80, bevorzugt 15 bis 75, besonders bevorzugt 25 bis 70, ganz besonders bevorzugt 30 bis 65 und insbesondere 35 bis 60 Gew.-%, jewells bezogen auf die Dispersion (B).

Die primären wäßrigen Dispersion (B) sind handelsübliche Produkte und werden beispielsweise von der Firma BASF Akliengesellschaft unter der Marke Acronal®, insbesondere Acronal® 290 D, oder von der Firma Zeneca Resins unter der Marke Neocryl®, insbesondere Neocryl® XK-70, vertrieben.

Der Gehalt der Komponente: (I) an dem (Meth)Acrylatcopolymerisat (A) kann breit variieren. Vorzupweise liegt er, bezogen auf den Festkörper der Komponente (I), bei 5 bis 50, bevorzugt 6 bis 45, besonders bevorzugt 7 bis 40, ' ganz besonders bevorzugt 8 bis 35 und insbesondere 2 bis 30 Gew.-%.

Desgleichen kann der Gehalt der Komponente (I) an dem (Meth)Acrylatcopolymerisat (B) breit variieren. Vorzugeweise liegt er, bezogen auf den Festköper der komponente (I), bei 5 bis 50, bevorzugt 6 bis 45, besondern bevorzugt 7 bis 40, ganzbesondern bevorzugt 8 bis 35 und insbesondere 2 bis 30 Gew.-%.

Für die Komponente (I) und den neuen wäßrigen Mehrkomponentenbeschichtungsttof ist es von Vorteil, wenn das Gewichtsverhältnis von (Meth)Acrylalcopolymerisat (A) zu (Meth)Acrylatcopolymerisat (B) bei 10 ; 1 bis 1 : 3, bevorzugt 8 : 1 bis 1 : 2,5, besonders bevorzugt 6 : 1 bis 1 : 2, ganz besonders bevorzugt 4 : 1 bis 1 : 1,5 und insbesondere 2 : 1 bis 1: 1 liegt.

Bei dem Ausgangsprodukt (C) handelt es sich um mindestens ein Pigmente und/oder mindestens einen anorganischen Füllstoff. Dabei kann es sich um farb- und/oder effaktgebande, fluoreszierende, elektrisch leitfähige und/oder magnetisch abschirmende Pigmente, Metallpulver, kratzfest machende Pigmente, organische Farbstoffe, anorganische, transparente oder opake Füllstoffe und/oder Nanopartikel handeln.

Beispiele geeigneter Effektpigmente sind Metallplättchenpigmente wie handelsübliche Aluminiumbronzen, gemäß DE 36 36 183 A 1 chromatierte Aluminiumbronzen, und handelsüblishe Edelstahlbronzen sowie nichtmetallische Effektpigmente, wie zum Beispiel Perlglanz-bzw. Interferenzpigmente, plättchenförmige Effektpigmente auf der Basis von Eisenoxid, das einen Farbton von Rosa bis Braunrot aufweist oder flüssigkristalline Effektpigmente. Ergänzend wird auf Römpp Lexikon Lacke und Druckfarben, Georg Thieme Verlag, 1998, Seiten 176, »Effektpigmente und Seiten 380 und 381 »Metalloxid-Glimmer-Pigmente« bis »Metallpigmente«, und die Patentanmeldungen und Patente DE 36 36 156 A 1, DE 37 18 446 A 1, DE 37 19 804 A 1, DE 39 30 601 A 1, EP 0 068 311 A 1, EP 0 264 843 A 1, EP 0 265 820 A 1, EP 0 283 852 A 1, EP 0 293 746 A 1, EP 0 417 567 A 1, US 4,828,826 A oder US 5,244,649 A verwiesen.

Beispiele für geeignete anorganische farbgebende Pigmente sind Weißpigmente wie Titandioxid, Zinkweiß, Zinksulfid oder Lithopone; Schwarzpigmente wie Ruß, Eisne-Mangan-Schwartz oder Spinellschwarz; Buntpigmente wie Chromoxid, Chromoxidhydratgrün, Kobaltgrün oder Ultramaringrün, Kobaltblau, Ultramarinblau oder Manganblau, Ultramarinviolett oder Kobalt- und Manganviolett, Eisenoxidrot, Cadmiumsulfoselenid, Molybdatrot oder Ultramarinrot; Eisenoxidbraun, Mitschbraum, Spinell- und Korundphasen oder Chromorange; oder Eisenoxidgelb, Nickeltitangelb. Chromtitangelb. Cadmiumsulfid, Cadmiumzinksulfid, Chromgelb oder Bismutvanadat.

Beispiele für geeignete organische farbgebende Pigmente sind Monoazopigmente, Bisazopigmente, Anthrachinonpigmente, Benzimidazolpigmente, Chinacridonpigmente, Chinophthalonpigmente, Diketopyrrolopyrrolpigmente, Dioxazinpigmente, Indanthronpigmente, Isoindolinpigmente, Isoindolinonpigmente, Azomethinpigmente, Thioindigopigmente, Metallkomplexpigmente, Perinonpigmente, Perylenpigmente, Phthalocyaninpigmente oder Anilinschwarz.

Ergänzend wird auf Römpp Lexikon Lacke und Druckfarben, Georg Thieme Verlag, 1998, Seiten 180 und 181, »Eisenblau-Pigmente« bis »Eisenoxidschwarz«, Seiten 451 bis 453 »Pigmente« bis »Pigmentvolumenkonzentration«, Seite 563 »Thioindigo-Pigmente«, Seite 567 »Titandioxid-Pigmente«, Seiten 400 und 467, »Natürlich vorkommende Pigmente«, Seite 459 »Polycyclische Pigmente«, Seite 52, »AzomethinPigmente«, »Azopigmente«, und Seite 379, »Metallkomplex-Pigmente«, verwiesen.

Beispiele für fluoreszierende Pigmente (Tagesleuchtpigmente) sind Bis(azomethin)-Pigmente.

Beispiele für geeignete elektrisch leitfähige Pigmente sind Titandioxid/Zinnoxid-Pigmente.

Beispiele für magnetisch abschirmende Pigmente sind Pigmente auf der Basis von Eisenoxiden oder Chromdioxid.

Beispiele für geeignete Metallpulver sind Pulver aus Metallen und Metallegierungen Aluminium, Zink, Kupfer, Bronze oder Messing.

Geeignete lösliche organische Farbstoffe sind lichtechte organische Farbstoffe mit einer geringen oder nicht vorhandenen Neigung zur Migration aus dem neuen wäßrigen Mehrkomponentenbeschichtungstoff und den hieraus hergestellten Beschichtungen. Die Migrationsneigung kann der Fachmann anhand seines allgemeinen Fachwissens abschätzen und/oder mit Hilfe einfacher orientierender Vorversuche beispielsweise Im Rahmen von Tönversuchen ermitteln.

Beispiele geeigneter anorganischer Füllstoffe sind Kreide, Calciumsulfate, Bariumsulfat, Silikate wie Talkum, Glimmer oder Kaolin, Kieselsäuren, Oxide wie Aluminiumhydroxid oder Magnesiumhydroxid Ergänzend wird auf Römpp Lexikon Lacke und Druckfarben, Georg Thieme Verlag, 1998, Seiten 250 ff., »Füllstoffe«, verwiesen.

Vorzugsweise werden Glimmer und Talkum angewandt, wenn die Kratzfestigkeit der aus den neuen wäßrigen Mehrkomponentenbeschichtungstoffen hergestellten Beschichtungen verbessert werden soll.

Außerdern ist es von Vorteil, Gemische von plättchenförmigen anorganischen Füllstoffen wie Talk oder Glimmer und nichtplättchenförmigen anorganischen Füllstoffen wie Kreide, Dolomit, Calciumsulfate, oder Bariumsulfat zu verwenden, weil hierdurch die Viskosität und das Fließverhalten sehr gut eingestellt werden kann.

Beispiele geeigneter transparenter Füllstoffe sind solche auf der Basis von Siliziumdioxid, Aluminiumoxid oder Zirkoniumoxid, insbesondere aber Nanopartikel auf dieser Basis.

Der Gehalt der Komponente (I) an den vorstchend beschriebenen Pigmenten und/oder Füllstoffen (C) kam sehr breit variieren und richtet sich nach den Erfordernissen des Einzelfalls. Vorzugsweise liegt er, bezogen auf den Festkörper der Komponente (I), bei 10 bis 90, bevorzugt 15 bis 85, besonders bevorzugt 20 bis 80, ganz besonders bevorzugt 25 bis 75 und insbesondere 30 bis 70 Gew.-%. Darüber hinaus kann die wäßrige Komponente (I) noch noch übliche und bekannte Zusatzstoffe (D) wie die vorstehend beschriebenen Reaktiverdünner; sonstige Vernetzungsmittel für die thermische Härtung, die sich von den Polyisocyanaten der Komponente (II) unterscheiden (vgl. die deutschen Patentanmeldung DE 198 55 146 A1, Seite 15, Zeile 16, Seite 16, Zeile 2); sonstige Bindemittel oder Bindemitteldispersionen, die sich von den vorstehend beschriebenen Bindemitteln oder Dispersionen (A) und (B) unterscheiden, wie beispielsweise primäre Dispersionen hydroxylgruppenhaltiger (Meth)Acrylatcopolymerisate; niedrigsiedende organische Lösemittel und hochsiedende organische Lösemittel ("lange Lösemittel"); Wasser; UV-Absorber; Lichtschutzmittel; Radikalfänger; thermolabile radikalische Initiatoren; Katalysatoren für die thermische Vernetzung; Entlüftungsmittel; Slipadditive; Polymerisationsinhibitoren; Entschäumer; Emulgatoren; Netz- und Dipergiermittel; Haftvermittler; Verlaufmittel; filmbildende Hilfsmittel; rheologiesteuernden Additive (Verdicker); Flammschutzmittel; Sikkative; Trockungsmittel; Hautverhinderungsmittel; Korrosionsinhibitoren; Wachse und Mattierungsmittel in üblichen und bekannten Mengen enthalten. Beispiele für diese Zusatzstoffe (D) sowie weitere geeignete Zusatzstoffe (D) werden in dem Lehrbuch »Lackadditive« von Johan Bieleman, Wiley-VCH, Weinheim, New York, 1998, beschrieben.

Die Herstellung der wäßrigen Komponente (I) weist keine methodischen Besonderheiten auf, sondern erfolgt durch das Vermischen der vorstehend beschriebenen Ausgangsprodukte (A), (B) und (C) sowie gegebenenfalls (D), wobei die auf dem Lackgebiet üblichen und bekannten Vorrichtungen zum Vermischen von Stoffen angewandt werden, wie Dissolver, In-line-Dissolver, Ultraturrax, Rührkessel, Kneter, Extruder, Rührwerksmühlen oder Microfluidizer. Dabei können die Ausgangsprodukte (C) zunächst mit dem Ausgangsprodukt (A) oder (B) oder dem Gemisch aus den Ausgangsprodukten (A) und (B) vermischt werden. Erfindungsgemäß ist es von Vorteil, wenn die Ausgangsprodukte (C) zunächst mit dem Ausgangsprodukt (A) vermischt werden, wonach der resultierenden Mischung gegebenenfalls geeignete Zusatzstoffe (D) hinzugefügt werden. Die Mischung aus (A) und (C) sowie gegebenenfalls (D) kann anschließend in einer geeigneten Vorrichtung, beispielsweise einer Rührwerksmühle, bis zu der gewünschten Feinheit nach Hegmann, von vorzugsweise 10 bis 30, bevorzugt 12 bis 28, besonders bevorzugt 14 bis 26, ganz besonders bevorzugt 16 bis 24 und insbesondere 18 bis 20 µm gemahlen werden. Anschließend wird die gemahlene Mischung mit dem Ausgangsprodukt (B), dem ebenfalls geeignete Zusatzstoffe (D) zuvor hinzugefügt werden können, vermischt.

Die Komponente (II) enthält mindestens ein Polyisocyanat als Vernetzungsmittel. Beispiele geeigneter Polyisocyanate und Komponenten (II) werden in der deutschen Patentanmeldung DE 199 04 317 A1, Seite 13, Zeilen 14 bis 51, beschrieben. Dabei kann die Komponente (II) noch mindestens eines der vorstehend beschriebenen sonstigen Vernetzungsmittel enthalten (vgl. auch DE 199 04 317 A, Seite 13, Zeile 52, bis Seite 14, Zeile 41).

Die Herstellung des neuen wäßrigen Mehrkomponentenbeschichtungstoffs aus den vorstehend beschriebenen Komponenten (I) und (II) sowie gegebenenfalls weiterer Komponenten bietet keine methodischen Besonderheiten, sondern wird mit Hilfe der üblichen und bekannten, vorstehend beschriebenen Mischvorrichtungen und -verfahren oder mittels üblicher Zwei- oder Mehrkomponenten-Dosier- und -mischanlagen durchgeführt. Für die Herstellung von Autoreparaturlacken, die üblicherweise in Kleinmengen gefertigt werden, erfolgt die Durchmischung per Hand, wenn es die Viskosität der Komponenten (I) und (II) gestattet. Der resultierende neue wäßrige Mehrkomponentenbeschichtungstoff kann mit weiteren Komponenten (III) usw. vermischt werden. Vorzugsweise wird er vor der Applikation mit deionisiertem Wasser auf die gewünschte Applikationsviskosität eingestellt.

Die neuen wäßrigen Mehrkomponentenbeschichtungstoffe können durch übliche Applikationsmethoden, wie z.B. Spritzen, Rakeln, Streichen, Gießen, Tauchen oder Walzen auf beliebige Substrate, wie z.B. Metall, Holz, Kunststoff, Glas, mineralische Baustoffe, Keramik oder Papier, aufgebracht werden. Aufgrund ihrer vorteilhaften Eigenschaften können sie nicht nur in der Automobilserien- und - reparaturlackierung, sondern auch zur Beschichtung von Bauwerken im Innen- und Außenbereich, zur Lackierung von Türen, Fenstern und Möbeln, der industriellen Lackierung, inklusive Coil Coating, Container Coating und der Imprägnierung und/oder Beschichtung elektrotechnischer Bauteile, sowie zur Lackierung von weißer Ware, inclusive Haushaltsgeräte, Heizkessel und Radiatoren, mit Vorteil verwendet werden.

Vorzugsweise wird der neue wäßrige Mehrkomponentenbeschichtungstoff als Füller oder Decklack in der Automobilserien- und -reparaturlackierung eingesetzt. Besondere Vorteile zeigt er in seiner Verwendung als Trockenschliff-Füller in der Automobilreparaturlackierung.

Bei ihrer Verwendung in der Autoreparaturlackierung werden die neuen wäßrigen Mehrkomponentenbeschichtungstoffe üblicherweise bei Temperaturen von unter 120°C, bevorzugt bei Temperaturen von maximal 80°C, gehärtet. Bei ihrer Verwendung in der Autoserienlackierung werden auch höhere Härtungstemperaturen angewandt.

In all diesen Anwendungen liefern sie Beschichtungen, die auch bei hohen Trockenschichtdicken von über 100 µm frei von Kochern und anderen Lackstörungen sind und eine hervorragende Haftung auf den jeweiligen Substraten, beispielsweise auf den Originallackierungen von Automobilen, aufweisen. Als Trockenschliff-Füllerlackierungen lassen sich problemlos schleifen und mit allen üblichen und bekannten Basislacken und/oder Klarlacken überschichten. Nach deren Härtung weisen die Trockenschliff-Füllerlackierungen eine hervorragende Haftung zu den Basislackierungen und/oder Klarlackierungen auf.

### Beispiele und Vergleichsversuche

### Herstellbeispiel 1

### Die Herstellung einer sekundären wäßrigen Dispersion (A)

In einem Stahlreaktor, ausgerüstet mit Rührer, Rückflußkühler, zwei Zulaufgefäßen und einer Ölheizung, wurden 94 Gewichtsteile Methylisobutylketon vorgelegt und unter Rühren auf 110°C erhitzt. Innerhalb von drei Stunden wurde dann eine Monomermischung aus 32,9 Gewichtsteilen Styrol, 38,3 Gewichtsteilen Methylmethacrylat, 22 Gewichtsteilen Laurylmethacrylat, 49,5 Gewichtsteilen Hydroxyethylmethacrylat und 43,9 Gewichtsteilen Methylmethacrylat gleichmäßig zudosiert. Gleichzeitig beginnend und parallel hierzu wurde eine Mischung aus 25,8 Gewichtsteilen Methylisobutylketon und 11,3 Gewichtsteilen tert.-Butylperoxyethylhexanoat gleichmäßig zudosiert. Die resultierende Reaktionsmischung wurde während einer Stunde bei 110°C gerührt.

Im Anschluß daran wurde bei dieser Temperatur während 1,5 Stunden eine Monomermischung aus 14,1 Gewichtsteilen Styrol, 16,4 Gewichtsteilen Methylmethacrylat, 9,4 Gewichtsteilen Laurylmethacrylat, 52,4 Gewichtsteilen Hydroxyethylmethacrylat, 18,8 Gewichtsteilen Butylmethacrylat und 15,9 Gewichtsteilen Acrylsäure zudosiert. Gleichzeitig beginnend und parallel hierzu wurde während zwei Stunden eine Lösung aus 16,6 Gewichtsteilen Methylisobutylketon und 7,5 Gewichtsteilen tert.-Butylperoxyethylhexanoat zudosiert. Die resultierende Reaktionsmischung wurde während zwei Stunden bei 110°C gerührt.

Hiernach wurde die Reaktionsmischung mit 17,5 Gewichtsteilen Dimethylethanolamin versetzt, wonach die neutralisierte Reaktionsmischung bei 80°C in 149,5 Gewichtsteilen deionisiertem Wasser dispergiert wurde. Die resultierende Dispersion wurde während einer Stunde bei 80°C gehalten. Anschließend wurden weitere 330 Gewichtsteile deionisiertes Wasser zugesetzt, und das Methylisobutylketon wurde im Vakuum abdestilliert.

Die resultierende sekundäre wäßrige Dispersion wurde mit deionisiertem Wasser auf einen Festkörpergehalt von 40 Gew.-% eingestellt. Sie wies einen pH-Wert von 7,5 und eine Säurezahl von 40 mg KOH/g Methacrylatcopolymerisat (A) auf.

### Beispiel 1

### Die Herstellung eines neuen wäßrigen Mehrkomponentenbeschichtungstoffs

### 1.1 Die Herstellung der wäßrigen Komponente (I)

Für die Herstellung der wäßrigen Komponente (I) wurden 20 Gewichtsteile der Dispersion des Herstellbeispiels 1 in einem Dissolver mit den nachstehend aufgeführten Stoffen in der angegebenen Reihenfolge und Menge vermischt:
0,27 Gewichtsteile deionisiertes Wasser,
0,03 Gewichtsteile Dimethylethanolamin,
0,4 Gewichtsteile Butylglykol,
0,4 Gewichtsteile des Netzmittels Tensid S der Firma Air Products.,
0,3 Gewichtsteile des Entschäumers Byk® 23 Firma Byk Chemie,
2,25 Gewichtsteile deionisiertes Wasser,
2,25 Gewichtsteile Butylglykol,
0,6 Gewichtsteile Aerosil® R 972 der Firma Degussa,
7,0 Gewichtsteile Talkum 10 MO Mikro der Firma Luzenac,
3,0 Gewichtsteile Novacite® L 207 A (Siliziumdioxid der Firma der Firma Chemag),
10,2 Gewichtsteile Blanc Fixe Micro (Bariumsulfat-Pigment der Firma Sachtleben),
8,0 Gewichtsteile Aluminiumsilikat der Firma Lonza (Engelhard),
7,2 Gewichtsteile Titan Rutil TR 92 (Titandioxid-Pigment der Firma Tioxide),
0,3 Gewichtsteile Flammruß 101 (Rußpigment der Firma Degussa) und
6,6 Gewichtsteile deionisiertes Wasser.

Die resultierende Mischung wurde auf einer Rührwerksmühle bis zu einer Feinheit nach Hegmann von 18 bis 20 µm gemahlen. Durch Kühlung wurde gewährleistet, daß die Temperatur des Mahlguts nicht über 50°C stieg.

68,8 Gewichtsteile der resultierenden Dispersion (A/C/D) wurden in einem Dissolver mit 0,2 Gewichtsteilen einer zehnprozentigen wäßrigen Natriumnitritlösung und 16 Gewichtsteilen der hydroxylgruppenhaltigen primären Acrylatdispersion Bayhydrol® VPLS 2318 (Festkörpergehalt: 43 Gew.-%; Hydroxylgruppengehalt: 2,0 Gew.-%) der Firma Bayer AG vermischt.

Parallel hierzu wurden 10 Gewichtsteile der primären Acrylatdispersion Neocryl® XK 70 in einem Dissolver vorgelegt und mit 0,8 Gewichtsteilen einer 12,5prozentigen Lösung von Nipacite® BIT 20 in Wasser (Konservierungsmittel auf der Basis von 1,2-Benzisothiazolin-3-on der Firma Nipa Laboratories GmbH), einem Gemisch aus 0,65 Gewichtsteilen deionisiertem Wasser, 0,37 Gewichtsteilen Ethoxypropanol, 0,37 Gewichtsteilen Solvesso® 200 und 0,06 Gewichtsteilen Additol® XW 395 (Verlaufmittel, der Firma Hoechst), einer Mischung aus 0,03 Gewichtsteilen Collacral® PU 75 (Verdicker auf der Basis von Polyurethan der Firma BASF AG) und 0,44 Gewichtsteilen deionisiertem Wasser sowie mit 3,0 Gewichtsteilen deionisiertem Wasser vermischt. Es resultierte die Dispersion (B/D).

Anschließend wurden die Dispersion (A/C/D) und die Dispersion (B/D) zu der wäßrigen Komponente (I) vereinigt.

### 1.2 Die Herstellung der Komponente (II)

Die Komponente (II) wurde durch Vermischen von 46,4 Gewichtsteilen Bayhydur® VPLS
2150 (hydrophiles Polyisocyanat auf Basis von Isophorondiisocyanat der Firma Bayer AG), 32,5 Gewichtsteilen Bayhydur® VPLS 2219 (hydrophiles Polyisocyanat auf Basis von Hexamethylendiisocyanat der Firma Bayer AG) und 21,1 Gewichtsteilen Solvesso®200 hergestellt.

### 1.3 Die Herstellung des neuen wäßrigen Mehrkomponentenbeschichtungstoffs

Die Herstellung des neuen wäßrigen Mehrkomponentenbeschichtungstoffs erfolgte durch das Vermischen von 14,2 Gewichtsteilen der Komponente (II) (vgl. Ziff. 1.2) mit 100 Gewichtsteilen der Komponente (I) (vgl. Ziff. 1.1). Dabei wurde die Komponente (II) per Hand in die Komponente (I) eingerührt. Durch Zugabe von 12 Gewichtsteilen deionisiertem Wasser wurde der Beschichtungsstoff auf die gewünschte Spritzviskosität eingestellt.

### Vergleichsversuch V 1

### Die Herstellung eines herkömmlichen wäßrigen Mehrkomponentenbeschichtungstoffs

Beispiel 1 wurde wiederholt, nur daß anstelle von Neocryl® XK70 die gleiche Menge der sekundären Dispersion des Herstellbeispiels 1 verwendet wurde.

### Beispiel 2 und Vergleichsversuch V 2

### Die Herstellung einer erfindungsgemäßen (Beispiel 2) und einer nicht erfindungsgemäßen (Vergleichsversuch V 2) Trockenschliff-Füllerlackierung

Für das Beispiel 2 wurde der Trockenschliff-Füller des Beispiels 1 verwendet.

Für den Vergleichsversuch V 2 wurde der Trockenschliff-Füller des Vergleichsversuchs V 1 verwendet.

Die Trockenschliff-Füller wurden mit Hilfe von Sprühpistolen SATA NR95 der Firma SATA, Komwestheim, in zwei Spritzgängen mit fünf Minuten Zwischenablüftzeit auf handelsübliche, phosphatierte und mit einer kathodisch abgeschiedenen Elektrotauchlackierung grundierte Stahlbleche appliziert. Hiernach wurden die Naßschichten während 30 Minuten bei Raumtemperatur abgelüftet und während 30 Minuten bei 60°C gehärtet.

In einer ersten Serie erfolgte der Auftrag derart, daß nach der Härtung Trockenschliff-Füllerlackierungen einer Trockenschichtdicke von 50 bis 60 µm resultierten.

In einer zweiten Serien erfolgte der Auftrag in Keilform zur Ermittlung der Kochergrenze.

Die Trockenschliff-Füllerlackierung des Vergleichsversuchs V 2 - erste Serie wies bei der Trockenschichtdicke von 50 bis 60 µm Kocher auf. Die Trockenschliff-Füllerlackierung des Vergleichsversuchs V 2 - zweite Serie ergab eine Kochergrenze von 40 µm.

Dagegen war die Trockenschliff-Füllerlackierung des Beispiels 2 - erste Serie frei von Kochern und anderen Lackstörungen. Insgesamt wie sie einen hervorragenden Verlauf und eine hervorragende Haftung zur Elektrotauchlackierung auf. Sie konnte problemlos geschliffen und mit Zweikomponenten-Decklacken, wie sie üblicherweise in der Autoreparaturlackierung verwendet werden, überlackiert werden. Die Trockenschliff-Füllerlackierung des Beispiels 2 - zweite Serie ergab eine Kochergrenze von 110 µm.

## Patentansprüche

1. Wäßriger Mehrkomponentenbeschichtungsstoff, enthaltend
(I) eine wäßrige Komponente, herstellbar durch Vermischen mindestens der folgenden Ausgangsprodukte:
(A) mindestens eine sekundäre wäßrige Dispersion mindestens eines (Meth)Acrylatcopolymerisats, das Im statistischen Mittel mindestens eine Isocyanatreaktive funktionelle Gruppe im Molekül enthält,
(B) mindestens eine primäre wäßrigen Dispersion mindestens eines (Meth)Acrylatcopolymerisats, das keine isocyanatreaktive funktionelle Gruppe enthält, und
(C) mindestens ein Pigment und/oder einen anorganischen Füllstoff;
sowie
(II) eine Komponente, enthaltend mindestens ein Polyisocyanat als Vernetzungsmittel.

2. Wäßriger Mehrkomponentenbeschichtungstoff nach Anspruch 1, **dadurch gekennzeichnet, daß** das (Meth)Acrylatcopolymerisat (A) durch mehrstufige Copolymerisation hergestellt wird.

3. Wäßriger Mehrkomponentenbeschichtungsstoff nach Anspruch 1 oder 2, **dadurch gekennzeichnet, daß** das (Meth)Acrylatcopolymerisat (A) durch zweistufige Copolymerisation hergestellt wird.

4. Wäßriger Mehrkomponentenbeschichtungsstoff nach einem der Ansprüche 1 bis 3, **dadurch gekennzeichnet, daß** das (Meth)Acrylatcopolymerisat (B) durch Emulsionspolymerisation hergestellt wird.

5. Wäßriger Mehrkomponentenbeschichtungsstoff nach einem der Ansprüche 1 bis 4, **dadurch gekennzeichnet, daß** die Komponente (II) flüssig ist.

6. Wäßriger Mehrkomponentenbeschichtungstoff nach einem der Ansprüche 1 bis 5, **dadurch gekennzeichnet, daß** die isocyanatreaktiven funktionellen Gruppen aus der Gruppe, bestehend aus Hydroxylgruppen, Thiolgruppen, primäre und sekundäre Aminogruppen und Iminogruppen ausgewählt werden.

7. Wäßriger Mehrkomponentenbeschichtungsstoff nach einem der Ansprüche 1 bis 6, **dadurch gekennzeichnet, daß** das (Meth)Acrylatcopolymerisat (A) in der Komponente (I), bezogen auf deren Festkörper, in einer Menge von 5 bis 50 Gew.-% enthalten ist.

8. Wäßriger Mehrkomponentenbeschichtungstoff nach einem der Ansprüche 1 bis 7, **dadurch gekennzeichnet, daß** das (Meth)Acrylatcopolymerisat (B) in der Komponente (I), bezogen auf deren Festkörper, in einer Menge von 5 bis 50 Gew.-% enthalten ist.

9. Wäßriger Mehrkomponentenbeschichtungstoff einem der Ansprüche 1 bis 8, **dadurch gekennzeichnet, daß** in der Komponente (I) das Gewichtsverhältnis von (Meth)Acrylatcopolymerisat (A) zu (Meth)Acrylatcopolymerisat (B) bei 10 : 1 bis 1 : 3 liegt.

10. Verwendung des wäßrigen Mehrkomponentenbeschichtungsstoffs gemäß einem der Ansprüche 1 bis 9 in der Automobilserien- und - reparaturlackierung, zur Beschichtung von Bauwerken im Innen- und Außenbereich, zur Lackierung von Türen, Fenstern und Möbeln, der industriellen Lackierung, inklusive Coil Coating, Container Coating und der Imprägnierung und/oder Beschichtung elektrotechnischer Bauteile, sowie zur Lackierung von weißer Ware, inclusive Haushaltsgeräte, Heizkessel und Radiatoren.

11. Die Verwendung nach Anspruch 10, **dadurch gekennzeichnet, daß** der wäßrige Mehrkomponentenbeschichtungstoff als Füller oder Decklack in der Automobilserien- und -reparaturlackierung verwendet wird

12. Die Verwendung nach Anspruch 11, **dadurch gekennzeichnet, daß** der wäßrige Mehrkomponentenbeschichtungsstoff als Trockenschliff-Füller in der Automobilreparaturlackierung verwendet wird.

## Claims

1. Aqueous multicomponent coating material comprising
(I) an aqueous component preparable by mixing at least the following starting products:
(A) at least one secondary aqueous dispersion of at least one (meth)acrylate copolymer containing on average per molecule at least one isocyanate-reactive functional group,
(B) at least one primary aqueous dispersion of at least one (meth)acrylate copolymer containing no isocyanate-reactive functional group, and
(C) at least one pigment and/or one inorganic filler;
and also
(II) a component comprising at least one polyisocyanate as crosslinking agent.

2. Aqueous multicomponent coating material according to Claim 1, **characterized in that** the (meth)acrylate copolymer (A) is prepared by multistage copolymerization.

3. Aqueous multicomponent coating material according to Claim 1 or 2, **characterized in that** the (meth)acrylate copolymer (A) is prepared by two-stage copolymerization.

4. Aqueous multicomponent coating material according to any of Claims 1 to 3, **characterized in that** the (meth)acrylate copolymer (B) is prepared by emulsion polymerization.

5. Aqueous multicomponent coating material according to any of Claims 1 to 4, **characterized in that** component (II) is liquid.

6. Aqueous multicomponent coating material according to any of Claims 1 to 5, **characterized in that** the isocyanate-reactive functional groups are selected from the group consisting of hydroxyl groups, thiol groups, primary and secondary amino groups, and imino groups.

7. Aqueous multicomponent coating material according to any of Claims 1 to 6, **characterized in that** the (meth)acrylate copolymer (A) is present in component (I), based on its solids, in an amount of from 5 to 50% by weight.

8. Aqueous multicomponent coating material according to any of Claims 1 to 7, **characterized in that** the (meth)acrylate copolymer (B) is present in component (I), based on its solids, in an amount of from 5 to 50% by weight.

9. Aqueous multicomponent coating material according to any of Claims 1 to 8, **characterized in that** the weight ratio of (meth)acrylate copolymer (A) to (meth)acrylate copolymer (B) in component (I) is from 10 : 1 to 1 : 3.

10. Use of the aqueous multicomponent coating material according to any of Claims 1 to 9 in automotive OEM finishing and automotive refinish, for coating buildings inside and outside, for coating doors, windows, and furniture, for industrial coating, including coil coating, container coating, and the impregnation and/or coating of electrical components, and also for coating white goods, including domestic appliances, boilers, and radiators.

11. Use according to Claim 10, **characterized in that** the aqueous multicomponent coating material is used as a primer-surfacer or topcoat material in automotive OEM finishing and automotive refinish.

12. Use according to Claim 11, **characterized in that** the aqueous multicomponent coating material is used as a dry-sanding primer-surfacer in automotive refinish.

## Revendications

1. Matériau de revêtement multicomposant aqueux, contenant :
(I) un composant aqueux, fabricable par mélange d'au moins les produits de départ suivants :
(A) au moins une dispersion aqueuse secondaire d'au moins un copolymère de (méth)acrylate, qui contient en moyenne statistique au moins un groupe fonctionnel réactif avec les isocyanates par molécules,
(B) au moins une dispersion aqueuse primaire d'au moins un copolymère de (méth)acrylate, qui ne contient pas de groupe fonctionnel réactif avec les isocyanates, et
(C) au moins un pigment et/ou une charge inorganique ; et
(II) un composant contenant au moins un polyisocyanate en tant qu'agent de réticulation.

2. Matériau de revêtement multicomposant aqueux selon la revendication 1, **caractérisé en ce que** le copolymère de (méth)acrylate (A) est fabriqué par copolymérisation à plusieurs étapes.

3. Matériau de revêtement multicomposant aqueux selon la revendication 1 ou 2, **caractérisé en ce que** le copolymère de (méth)acrylate (A) est fabriqué par copolymérisation à deux étapes.

4. Matériau de revêtement multicomposant aqueux selon l'une quelconque des revendications 1 à 3, **caractérisé en ce que** le copolymère de (méth)acrylate (B) est fabriqué par polymérisation en émulsion.

5. Matériau de revêtement multicomposant aqueux selon l'une quelconque des revendications 1 à 4, **caractérisé en ce que** le composant (II) est liquide.

6. Matériau de revêtement multicomposant aqueux selon l'une quelconque des revendications 1 à 5, **caractérisé en ce que** les groupes fonctionnels réactifs avec les isocyanates sont choisis dans le groupe constitué par les groupes hydroxyle, les groupes thiol, les groupes amino primaires et secondaires et les groupes imino.

7. Matériau de revêtement multicomposant aqueux selon l'une quelconque des revendications 1 à 6, **caractérisé en ce que** le copolymère de (méth)acrylate (A) est contenu dans le composant (I) en une quantité de 5 à 50 % en poids, par rapport à ses solides.

8. Matériau de revêtement multicomposant aqueux selon l'une quelconque des revendications 1 à 7, **caractérisé en ce que** le copolymère de (méth)acrylate (B) est contenu dans le composant (I) en une quantité de 5 à 50 % en poids, par rapport à ses solides.

9. Matériau de revêtement multicomposant aqueux selon l'une quelconque des revendications 1 à 8, **caractérisé en ce que** le rapport en poids entre le copolymère de (méth)acrylate (A) et le copolymère de (méth)acrylate (B) dans le composant (I) est de 10:1 à 1:3.

10. Utilisation du matériau de revêtement multicomposant aqueux selon l'une quelconque des revendications 1 à 9 dans le laquage automobile de série et de réparation, pour le revêtement d'ouvrages intérieurs et extérieurs, pour le laquage de portes, de fenêtres et de meubles, le laquage industriel, y compris le laquage continu, le revêtement de contenants et l'imprégnation et/ou le revêtement de composants électrotechniques, ainsi que pour le laquage d'appareils électroménagers, y compris les appareils domestiques, les chaudières et les radiateurs.

11. Utilisation selon la revendication 10, **caractérisée en ce que** le matériau de revêtement multicomposant aqueux est utilisé en tant que charge ou laque de finition dans le laquage automobile de série et de réparation.

12. Utilisation selon la revendication 11, **caractérisée en ce que** le matériau de revêtement multicomposant aqueux est utilisé en tant que charge de rectification à sec dans le laquage automobile de réparation.
